# EUROPEAN PATENT APPLICATION

(11) **EP 2 040 182 A1**
(43) Date of publication of application: **25.03.2009**
(21) Application number: 08160852.3
(22) Date of filing: 22.07.2008
(51) Int. Cl.: G06F 17/30

(54) **Dynamic system for creating and managing a database**

(30) Priority: 20.09.2007 IT MI20071825
(71) Applicant: Ballerini, Mario, 21020 Casciago (VA) (IT)
(72) Inventor: Ballerini, Mario, 21020 Casciago (VA) (IT)
(74) Representative: Petruzziello, Aldo

(57) **Abstract**

A dynamic system for creating and managing a database (4) is disclosed, comprising at least one server device (3, 6) in which a server software part (10) is installed and containing said database (4) and at least one client device (5, 7) in which a client software part (20) is installed. The client device (5, 7) is able to connect to the server device to access the database (4). The data contained in the database (4) are organised into dynamic tables according to a hierarchical tree structure (30). The server software part (10) comprises an abstractor module (13) which converts the hierarchical structure (30) into a relational structure (31) by using metadata (32) which contain information concerning the structure of the tables and of the fields.

## Description

The present invention refers to a system for dynamically creating and managing databases.

As is known, a database comprises a plurality of files. Each file comprises a plurality of tables containing the data (records) to be stored. The table comprises also various fields which contain the data of the records. The fields of the tables are created by means of special data entry forms. Furthermore the tables belonging to a file or to different files can be linked or related to one another.

Various systems for creating and managing relational database have been produced in the informatics literature, such as, for example, Adabas, GT.M, IMS, MUMPS, Caché (software), Metakit, Multidimensional hierarchical toolkit, Mumps compiler, DMSII, and FOCUS.

All the systems listed, however, provide only the mechanisms for creating data structures and for saving the information on storage systems. The mechanisms for managing these databases and the methods of displaying the data are left to software programmes specially written with a programming language.

This approach leads to various problems. The most serious arises from managing the modifications to the database. In the first place, in order to modify a database created with these systems of the prior art, system engineering knowledge that are not always available to the company are needed. In fact, the addition of a field to a table normally entails the modification of the structure of the data entry forms which will have the task of displaying the table. This operation requires a software programme to be compiled and is, therefore, the responsibility of a software developer.

Object of the present invention is to overcome the drawbacks of the prior art, by providing a system for creating and managing a database that can also be used even by an inexpert user, without the aid of a programmer.

Another object of the present invention is to provide such a system for creating and managing a database that is able to simplify the procedures for creating the relationships between tables belonging to the same file or to different files.

Yet another object of the present invention is to provide such a system for creating and managing a database that is able to facilitate the navigation between the data entry forms.

These objects are achieved in accordance with the invention with the characteristics listed in appended independent claim 1.

Advantageous embodiments of the invention are apparent from the dependent claims.

The system according to the invention provides for a software module for the abstraction from the data storage system used by the company. This abstraction module is realised as a true data management motor. The characteristics of this motor are those of re-creating a hierarchical structure within the most widely used servers for relational databases (MS SQL Server, MySQL, etc.) exploiting specially produced metadata.

The system according to the invention further comprises two subsystems or modules: a module for creating and managing the files and a module for displaying and searching the data entered. The file creation module is responsible for translating the hierarchies entered into a structure which is intelligible by the abstraction module (motor) which, in turn, generates the data storage tables. The data display module interprets the metadata to construct data entry windows and to create the hierarchical links between tables, so as to facilitate the navigation between said data.

Further characteristics of the invention will be made clearer by the detailed description that follows, referring to a purely exemplifying and therefore non limiting embodiment thereof illustrated in the appended figures, wherein:
- Figure 1 is a physical block diagram showing the hardware architecture of the dynamic system for creating and managing a database according to the invention;
- Figure 2 is a functional block diagram showing the software architecture of the system according to the invention;
- Figure 3 is a block diagram showing an example of the data structure of the system according to the invention;
- Figure 4 is a flow chart showing a coding procedure for the data structure of the system according to the invention;
- Figure 5 is a flow chart showing the display request procedure for the data of the data structure;
- Figure 6 is a flow chart showing the procedure for creating a data display window;
- Figure 7 is a flow chart showing the procedure for creating a tables control;
- Figure 8 is a flow chart showing the procedure for creating a link field between the tables;
- Figure 9 is a flow chart showing the procedure for calculating the control name;
- Figure 10 is a flow chart showing the re-positioning procedure in a table;
- Figure 11 is a flow chart showing the procedure for the reciprocal display of the tables;
- Figure 12 is a block diagram showing an example of data files linked to each other through fields called "link fields";
- Figure 13 is a block diagram showing the tables for the storage of the metadata and of other information essential for correct operation of the system;
- Figure 14 shows the fixed fields, also called "system fields", present in each data table created by the user;
- Figure 15 is a flow chart showing the profiling procedure;
- Figure 16 is a flow chart showing the profile selection management algorithm used in the profiling procedure;
- Figure 17 is a screen shot illustrating an example for the management of the dynamic tables of the Management Module module.

The system for creating and managing a database according to the invention is described with the aid of the figures.

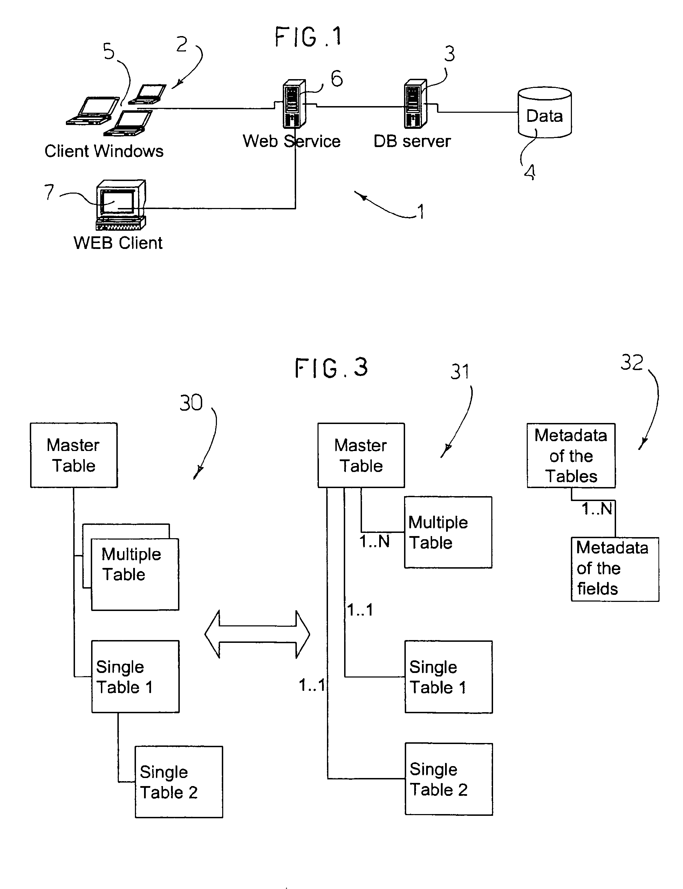

With reference for now to Figure 1, the hardware structure of the system according to the invention comprises a server part designated as a whole with the reference numeral 1 and a client part designated as a whole with the reference numeral 2.

The server part 1 comprises a main Server called DB Server 3 containing a data storage and filing means 4 designed to store the data of the database.

The client part 2 comprises a plurality of client devices 5 for data display, connected to the DB server 3.

An application software 3 that can be executed for creating and managing the database is installed in the DB server 3. This application software preferably operates with the Microsoft Windows operating system. Therefore, the client devices 5 for the display of the data must have the Microsoft Windows operating system installed for the operation of the executable application, installed in the DB server 3.

The server part 1 can also comprise a Web Server (e.g., Apache, IIS) 6 connected to the DB server 3. A WebService component that manages a web version of the database creating and managing application software is installed in the Web server 6.

Consequently, the client part 2 also comprises client web data display devices 7 that can connect to the Web server 6 to access the database 4 of the DB server 3. The web client devices 7 must simply be provided with a browser for access to the Web version of the application software.

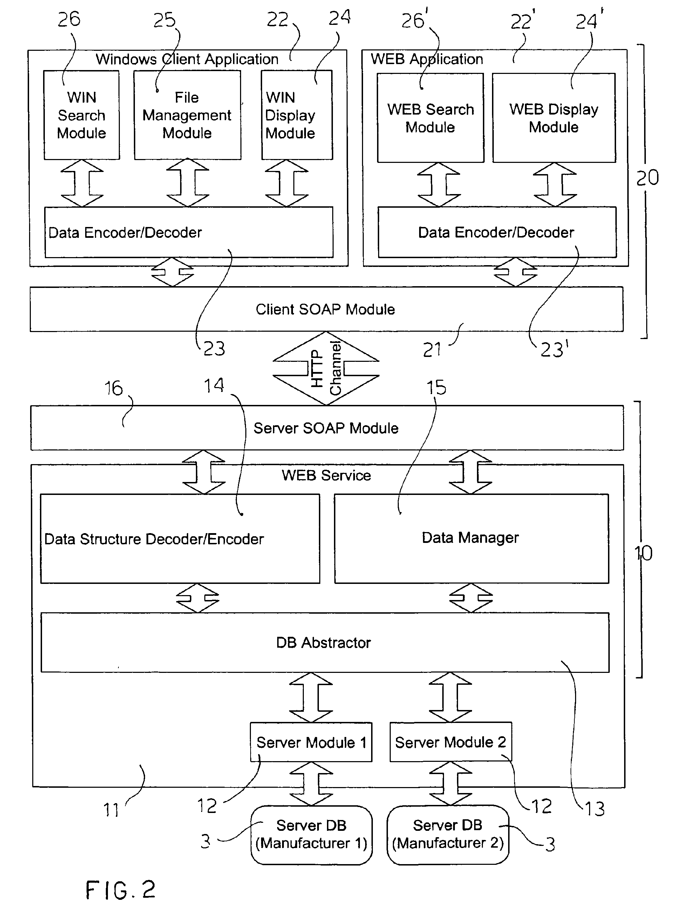

With reference for now to Figure 2, a software structure of the database creating and managing system according to the invention is described. This system comprises a server part 10 and a client part 20.

The server part 10 is responsible for providing information to the client devices 5 and 7 and for conversing with the database 4 contained in the DB server 3. For this purpose, the server part 10 comprises a main software module 11, called WEB service, structured in levels.

The first level of the Web service 11 comprises the Module Server level 12, which is responsible for interacting with the database 4 of the DB server 3 according to the operating details of the DB server 3. Thus, if a plurality of DB servers 3, produced by different manufacturers, is provided in the hardware structure, the first level of the Web service 11 must provide a plurality of server modules 12. In this manner, the higher levels of the Web service 11 are prevented from knowing the operating details of the DB servers 3 produced by different software houses.

The second level of the Web service 11 comprises an abstraction module 13 which is responsible for converting the hierarchical structures with which the data are organised into relational structures, more suited to the DB server 3 which is generally of the MS SQL Server, MySQL type etc.

As shown in Figure 3, the data contained in the database 4 of the DB server 3 are organised into dynamic tables according to a hierarchical tree structure 30 which comprises a master table, multiple tables and single tables. The abstraction module 13 converts the hierarchical structure 30 into a relational structure 31 by using metadata 32 which contain information concerning the structure of the tables and of the fields.

The abstractor module 13 is also responsible for performing the mapping between SQL standard types of data (relational structure 31) and the types of data shown by the "Dynamic Tables" (hierarchical structure 30). The list types of data, for example, are converted into a structure containing the possible values. There are two types of data that have a list display: the simple lists and the field lists (otherwise know as "magic fields"). One type of fixed value list data allows the operator who sets up the files to provide that in some fields the values admissible by the user who carries out the data entry are restricted to a limited set, so as to prevent wrong entries.

A typical example of a list field might be the list of the Italian provinces, where the admissible values are the names of all the provinces, or the possible currencies of a payment, where the possible values are expressed by the international identification codes of the currencies: EUR, USD etc.

Returning to Figure 2, the third level of the Web service 11 comprises a data structure decoder/encoder module 14 and a data managing module 15.

The decoder/encoder module 14 is responsible for converting the hierarchical data structure of the dynamic tables 30 into a format compatible for the transfer on an http channel through a SOAP Server module 16.

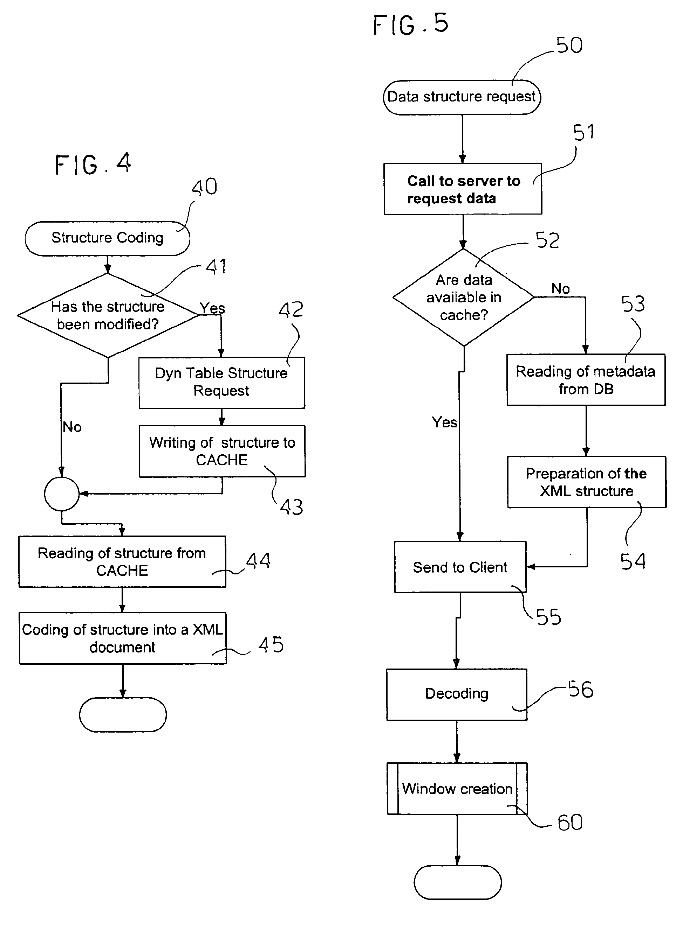

Figure 4 shows a data structure coding procedure 40 carried out by the decoder/encoder 14.

In the step 41, the decoder/encoder module 14 checks that the modification of the data structure of the dynamic tables 30 has taken place.

If this modification has actually taken place, in the step 42 the decoder/encoder module 14 asks the abstraction module 13 for the new structure 31 and in the step 43 it writes the new structure 31 in a cache memory.

Otherwise, in the step 44 the decoder/encoder module 14 reads a data structure from the local cache and in the step 45 it encodes said data structure into an XML document, increasing the speed of transmission.

Returning to Figure 2, the data managing module 15 is responsible for maintaining the link to the sets of records transferred to the client PCs 5 and 7 for displaying, modifying and deleting records. The data managing module 15 enters the additional information into the system fields (that is, those used by the dynamic tables 30 to maintain the hierarchies and the information on the modifications of the records).

The third level of the Web service 11 communicates with a SOAP server module 16 which, through an http channel, communicates with a SOAP client module 21 belonging to the client part 20. The SOAP Server module 16 is responsible for transferring the data relating to the structures generated by means of the dynamic tables through the http channel. The SOAP Server module 16 and the SOAP Client module 21 are responsible for transferring the data between client and server on the http channel using the SOAP protocol.

The Client part 20 comprises two applications: a Windows client application 22 and a web application 22'. The Windows client application 22 and the web application 22' comprise respective data decoding/encoding modules 23 and 23' which are responsible for converting the information of the file structures (received as XML documents) into data structures that can be used by the Windows and Web clients 5 and 7 to show said information.

Figure 5 shows a data structure request procedure 50 between the SOAP client module 21 and the SOAP server module16.

In the step 51 the SOAP client module 21 makes a call to the SOAP server module 16 to request the data. In the step 52 the SOAP server module 16 checks if the data are available in the cache memory.

If said data are not available, in the step 53 the SOAP server module 16 reads the metadata 32 from the database 4, in the step 54 it prepares a data structure with an XML document and in the step 55 it sends this data structure to the SOAP client module 21.

If the data are available, the procedure goes to the step 55 in which the SOAP server module 16 sends the data to the SOAP client module 21. In the step 56 these data are decoded by the decoder/encoder module 23, 23' and the procedure then goes to the step 60 in which a data management window (which will be described better further on) is created.

Returning to Figure 2, the Windows client application 22 comprises three sub-systems: a display module 24, a file creating and managing module 25 and a search module 26 for the data entered. The Web application 22', on the other hand, comprises only a web display module 24' and a web search module 26'.

The data display modules 24 and 24' interpret the metadata 32 to construct data entry windows and to create hierarchical links between tables, so as to facilitate the navigation between said data.

The Windows display module 24 and the WEB display module 24' use the data received from the server to carry out a series of operations suitable for the dynamic creation of the windows.

The file creating and managing module 25 is responsible for translating the hierarchies entered into a structure which is intelligible by the abstraction module 13 (motor) which, in turn, generates tables for filing the data (as will be described further on).

Lastly, the search modules 26 and 26' allow parametric queries to be created which can be used again each time the need arises.

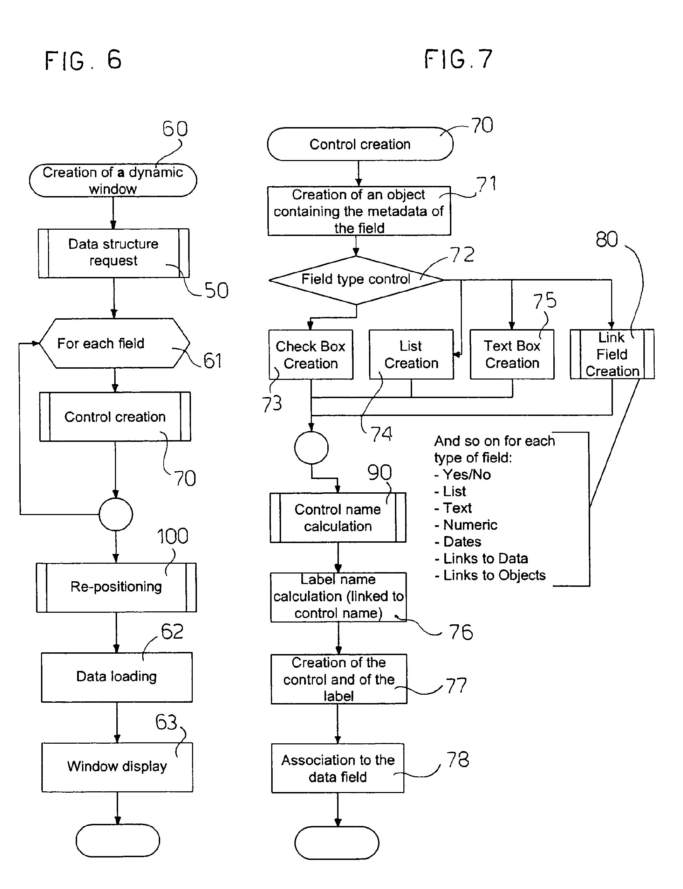

Figure 6 shows a procedure for dynamic creation of a window 60 carried out by the display modules 24 and 24'.

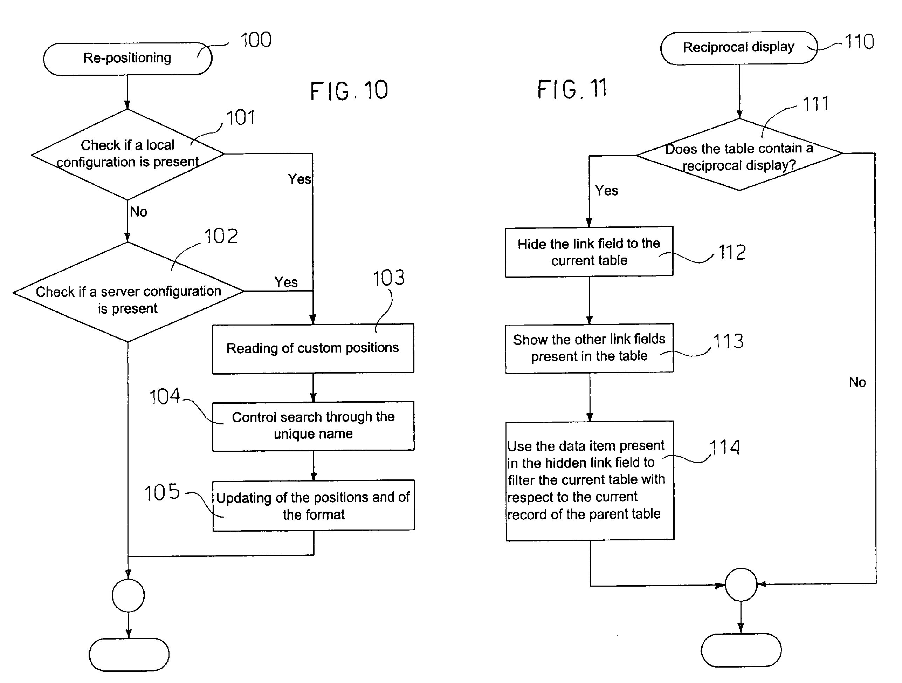

Firstly, the data structure request procedure 50 (described previously with reference to Figure 5) is carried out. A control creation procedure 70 (which will be described further on with reference to Figure 7) is performed for each field. Subsequently, a repositioning procedure 100 (which will be described further on with reference to Figure 10) is performed.

The procedure continues to the step 62 in which the data loading takes place. The data loading operation is carried out from the display module 24 (Figure 2) by activating a series of objects present at various levels of the functional block diagram of Figure 2. In particular, the display module 24, through an object called "Client Data Set", asks the SOAP Client 21 to return a data set relating to the table in which the data are being loaded. Together with the name of the table, the display module 24 also provides the unique identification key composed of 32 alphanumerical characters of the record whose data are required and the identification key of the work session active at that moment. This information is transmitted by the SOAP Client module 21 (Figure 2) to the corresponding SOAP Server module 16 (Figure 2) which performs the calls to the lower level Server modules (Modules 15 and 13). In particular, within the DB Abstractor module 13 the session key validity check is performed in order to prevent unauthorised accesses to data which use the http channel and thus the Internet for Client/Server communications.

The Server Module 12 is responsible for converting the request made by the client into SQL commands that can be recognised by the DB Server 3 to which the application is related. When the data set comes back full, the window of the display module 24 proceeds fills the controls with the values present in the dataset. It is always up to the display module 24 to convert some values contained in the fields into data that are intelligible by the user.

This is valid, for example, for the lists of values which are saved in the DB Server 3 as unique 32-character keys and which in the display window are re-encoded with the descriptions associated with the unique keys.

For example, the element belonging to the set of possible values in a list 'ABCD' = 'Monday' in the Server Database is stored as 'ABCD' whereas the user who uses the window for entering, modificating and deleting the data sees "Monday". Once the step 62 has been completed, the data display module 24 displays the window which at this point has been filled automatically with the controls, the controls have been repositioned according to the user settings and finally they have been filled with the values present in the dataset returned by the Server 10.

Figure 7 shows the control creation procedure 70.

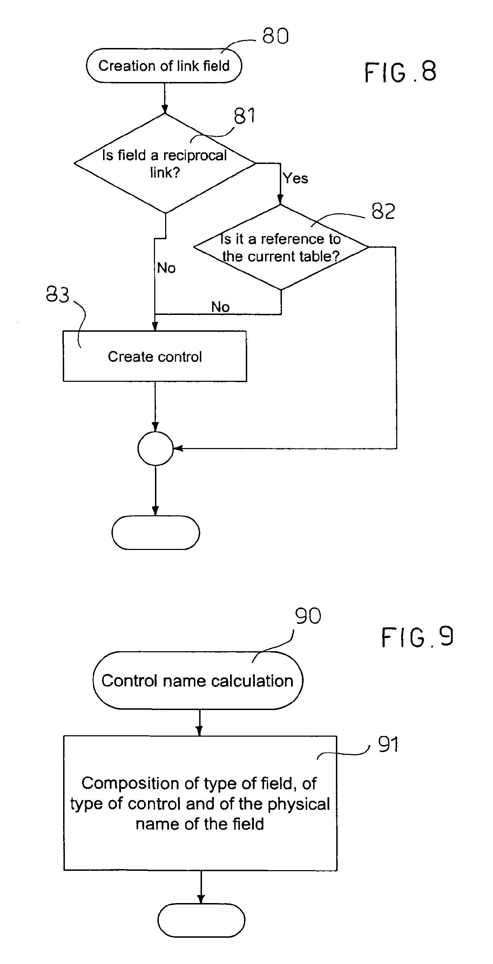

In the step 71 an object containing the metadata of the field 61 coming from the data structure request 50 is created. In the step 72 the type of field is checked. According to the type of field, a check box 73, a list 74 or a text box 75 is created or a link field creation procedure 80 (which will be described in detail with reference to Figure 8) is executed.

A control name calculation procedure 90 (which will be described in detail with reference to Figure 9) is subsequently executed. In the step 76 the name of the label linked to the control name calculated by the procedure 90 is calculated. In the step 77 the control and the label are created. Lastly, in the step 78 the control and the label are associated with the data field.

It can be noted that for each different type of field to be shown 61, the system activates a sub-procedure 70 adapted to use the best available control. In particular, for the Link type controls, the system will have to perform supplementary operations detailed in the flow chart of Figure 8, which describes the link field creation procedure 80.

In the step 81 the field is checked to see if it is a reciprocal link. If the field is not a reciprocal link, the procedure goes to the step 83, in which the control is created.

If the field is a reciprocal link, the procedure goes to the step 82, in which the field is checked to see if it is a reference to the current table. If the field is a reference to the current table, the procedure is ended; otherwise the step 83 is carried out, in which the control is created.

Figure 9 shows the control name calculation procedure 90. In the step 91, the composition of the type of field, of the type of control and of the physical name of the field is performed.

The control naming operation is performed by a special algorithm present in the display module 24. It is recalled for each data container control that the display module has to insert into the data modification, entry and deletion window. The name calculation algorithm is based on a series of items of information present in the metadata relating to the field of the table whose values must be displayed. The composition of the name takes place by concatenating a fixed pre-fix identifying the dynamically created controls ("DYN_CTR") together with a numerical value, which identifies the type of data that must be shown within the control and the unique, 32-character key uniquely identifying the field of the data table. Lastly, the physical name of the field of the table, that is the name with which said field is present in the table of the DB Server 3, is also concatenated. As can be deduced from the above described method, each control present in the entry, modification and deletion window of the display module 24 will always be re-created with the same name, in each work session of the system user and for each user. It is precisely this peculiarity that is exploited by the re-positioning procedure 100 (Figure 10).

In the step 101 the algorithm accesses an XML document having a proprietary format and saved in the same directory of the PC in which the executable file of the application is situated, to see if there is present therein a section relating to the table that is being shown in the entry, modification and deletion window of the display module 24 (Figure 2). This section, uniquely identified by the 32-character identification key associated with the table, contains the information relating to the positions, to the colour and to the format of the characters used in each control. The file, however, may not contain the section relating to the table to be loaded; this check is carried out in the step 101. If said section is not present, the display module 24 in the step 102 asks the server if a configuration for the current table is present. The step 103 decodes the XML document returned in both cases since the structure of said document is identical for client and server; they in fact represent a duplicate. Should both sections be present (on the server and in local), the operator could pass from a specific configuration for his PC to a configuration chosen at company level. The result, in both cases, is the repositioning of the controls in the entry, modification and deletion form of the display module 24. Three display modes are thus available:
- Standard display, in which the controls do not undergo any type of repositioning, of resizing and of colouring again;
- Custom Display on Server, in which the controls are repositioned, resized and recoloured according to the XML format document present on the server.
- Custom Display on Client, in which the controls are repositioned, resized and recoloured according to the XML format document present on a local file of the operator's PC.

The operator can pass from one display to another by selecting a button present in the entry, modification and deletion window of the display module 24.

In order to carry out the repositioning of the controls, the display module 24 carries out the step 104. In this step the display module re-calculates the control names by using the procedure 90 and carries out the search for said names inside the document obtained in the step 103. If the procedure finds a portion of the document relating to said control, it proceeds to call up the step 105 which carries out the repositioning thereof. This operation is repeated for each control present in the entry, modification and deletion window of the display module 24. The repositioning procedure of the step 105 provides for updating of the "Top", "Left" properties relating to the graphic control designed to contain the values of a field of the Database 3.

To update the size, the procedure modifies the "Width" and "Height" properties. To update the colours it proceeds with the modification of the "BackColor" and "ForeColor" properties. (Note: a discriminator is present within the procedure that recalls the right property for each graphic control in that not all the graphic controls used by the data display interface have the same name for a specific characteristic. For example, the background colour is sometimes called "Back Color", sometimes only "Color" and sometimes "Fill Color"). Lastly, it updates the properties relating to the data display font through the "Font" attributes shown by the graphic controls. In this case too the procedure is provided with a discriminator that selects the correct property for each type of customisation control.

As shown in Figure 11, the system according to the invention also implements a reciprocal display procedure 110 that makes it possible to access an item of information coming from different files. This procedure is performed by the display module 24. The first check, carried out in the step 111, is to analyse the structure of the metadata relating to the fields of the table that is to be displayed to check for the presence of "link"-type fields having the property "Reciprocal Display" set to "True". It should be remembered that the structure of the metadata has been performed earlier by the procedure 60 (Figure 6) and, in particular, by the step 50.

If, during the analysis of the list of the metadata, the procedure encounters the presence of link fields with reciprocal display, then the flow of the algorithm passes to the step 112, which performs a further search within the metadata to find the field containing the information relating to the link with the table itself. Once the field has been found, the procedure sets the visibility properties thereof to "False". Instead, this field will be used by the link destination table which will use it to allow the reverse link and thus to create the reciprocal display. The procedure then goes to the step 113, in which it shows the other link fields present in the table, making them visible inside the entry, modification and deletion window of the display module 24. The display mode for these fields is different from that of the other fields in that, within the window, the procedure creates and displays a button at the step 113, setting it alongside the traditional field, which will serve for the user to open a second window with the details of the table to which the field for which the reciprocal display is being activated is linked.

The last step performed by the procedure 110 is the step 114, which performs a filter on the data of the linked table to ensure that only those actually relating to the current table are visible in the graphic control in which the data of the "Reciprocal Link" field are visible. The unique 32-character identification key with which the data of the linked table are filtered is that corresponding to the record of the main table of the file, also called the Master table of the file.

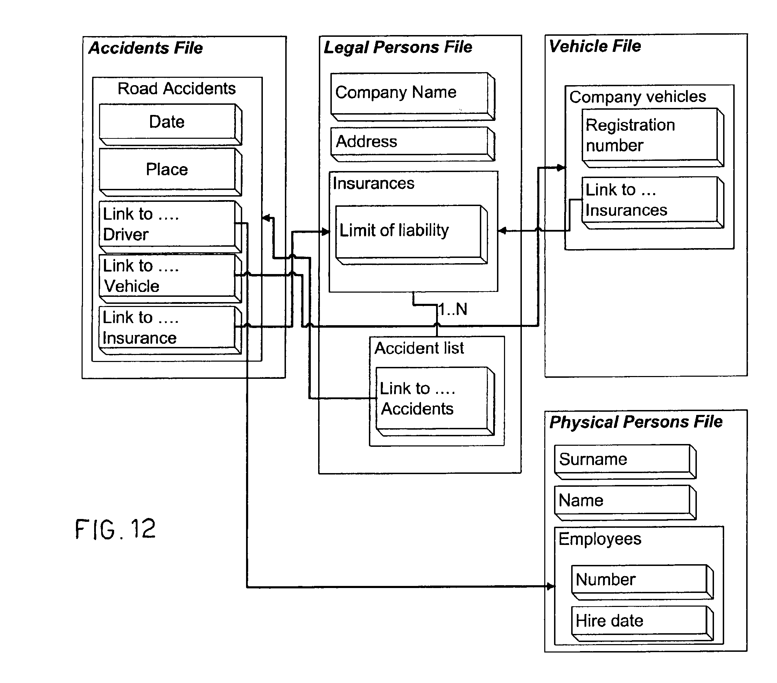

An example of database creation and management according to the invention is described below with reference to Figure 12.

An "Accidents" file is created containing the table "Road Accidents". This table, being the only one in the file, is also called the Master table.

A "Legal Persons" file is then created, within which, besides the master table always present in a file (and therefore not expressly present in the diagram) the fields "Company Name" and "Address" are contained. In the "Legal Persons" file the table "Insurances" and a sub-table (thus called because it can be reached only by passing through another table, in this case the "Accidents" table) called "Accidents List" are inserted.

Lastly, two further files are created: the "Vehicles" file and the "Natural Persons" file.

To each table created by adding, through a graphics tool, a node of a tree of objects which represent the tables and the categories through which said tables are grouped, the fields that determine the information contained therein are added.

For the insertion and the modification of the fields of the table, a special graphics wizard has been created (that is, a window which guides the operator step-by-step in the choices to be undertaken). Using said wizard, the link type fields (a specific characteristic of the system of the invention) have then been inserted.

In the example shown in Figure 12, the requirement was to link the "Road Accidents" table to the "Employees" table of the "Physical Persons" file and again the "Road Accidents" table to the "Company Vehicles" table of the "Vehicles" file and lastly to the "Insurances" table.

Using the Wizard, which makes it possible to choose only among the tables that can linked, a link field has been created between the "Company Vehicles" table of the "Vehicles" file and the "Insurances" table present in the "Legal Persons" file.

It should be noted in Figure 12 that the "Accidents" and "Insurances" tables, through "its" sub-table "Accident List", are linked with two arrows pointing in opposite directions. From a structural point of view, this characteristic is offered by the "Reciprocal Display" option present in the Wizard. The result obtained will be that of being able to navigate between the data relating to the two files, in both directions. It will therefore be possible to "jump" into the "Insurances" table directly from the "Road Accidents" table to display all the specific data of the insurance associated with the motor vehicle with which the accident occurred. Vice versa, it will be possible to "jump" from the "Accident List" sub-table into the "Road Accidents" table to find out the details of each accident managed by a specific insurance.

In Figure 12 the arrows exclusively coming out from a table allow the data to be navigated in only one direction.

The operation is concluded with the confirmation of the modifications carried out and with the saving of the new structure.

The data structure of the system according to the invention is described below.

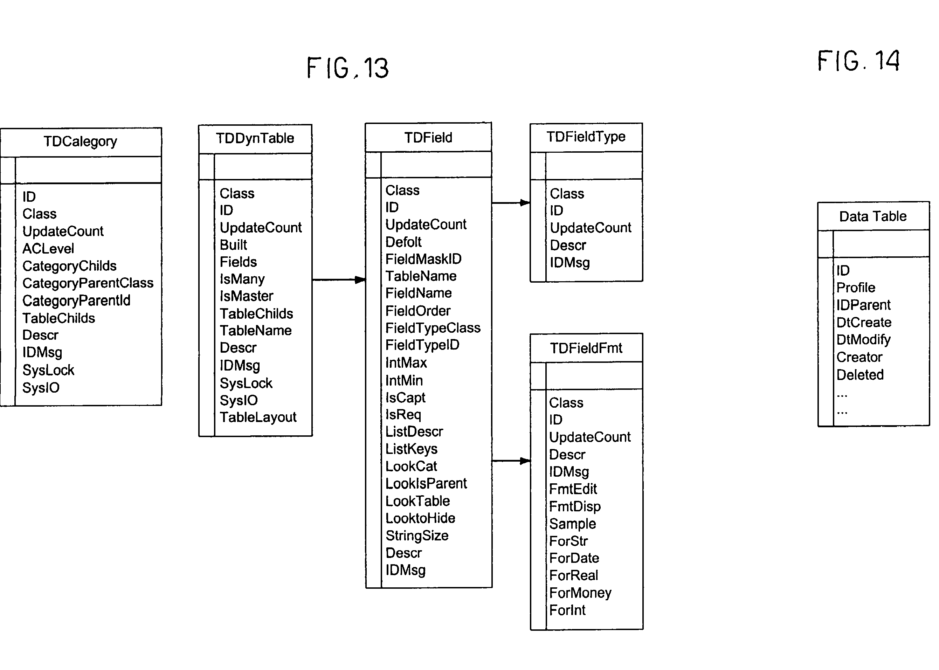

As shown in Figure 13, the data are saved inside the tables created directly by the DB Abstractor module 13. The information concerning the data structures can be found within any relational DB and must be organised as follows.

Figure 13 shows the list of tables that contain the metadata necessary for managing of the tables defined by the user.

In detail, the tables have the purposes listed in the scheme below:

| Table Name | DESCRIPTION |
|---|---|
| TDCategory | It contains the definitions of the categories though which the tables defined by the user are divided. It also contains the definitions of the files, considered as first-level categories (that is, not present as "children" of other categories. |
| TDDynTable | It contains the definitions of the dynamic tables created or that can be created through the system. It also contains the relationships between the tables (TableChilds field) and the type of accessibility of said tables (that is, the possibility of modifying their structure). This characteristic is provided by the SysLock and SysIo fields. |
| TDField | It contains the definitions of all the fields present in the tables created by the user. It also contains any formatting criteria and maximum or minimum admissible values. |
| TDFieldType | It contains the list of the types of data managed by the application (simple data such as numbers, strings and dates, but also complex data such as lists of fields, lists of values, links to objects forming part of the system). |
| TDFieldFmt | It contains the list of possible data formattings according to the type of field. (Used by the module for creating the dynamic tables to provide the user with a list of the formattings applicable to the fields he is creating). |

The TDCategory, TDDynTable e TDField tables are modified by the file managing module 25 and accessed for consultation by the data display module 24.

Figure 14 shows the Data tables which, besides the fields containing the information defined by the users, must contain a series of items of information necessary for navigating, profiling (which will be described below) and tracking the modifications.

A record profiling procedure which allows the tables to be organised within categories will now be described. This characteristic makes it possible to group logically a plurality of tables necessary to save the information relating to a specific type of information. By way of example, think of a Motor Vehicles file in which the tables are organised so as to group all the tables relating to the motor cars and separating them from the tables relating to vans.

The creation of the categories within a file can be done by the file managing module 25 (Figure 2), where said categories can be organised as a tree and can be subjected to an external authorisation system.

As explained previously, the motor of the dynamic tables is only a part of a complete system for managing not only data but also processes, messages and documents. In this scenario, a module has been created that can be accessed from all objects (documents, data, projects, processes), which makes it possible to set which groups of users can have access to each individual object. In the specific instance of the dynamic tables, this system makes it possible to indicate, for each file and, more in general, for each table, which users can access the tables contained within the categories.

The calculation algorithm of the visible tables is not part of the "Dynamic Tables" module. It is a task of the latter, however, to use the returned information to prepare the data navigation window in the display module 24.

Once the tree of the categories into which the tables of each file are organised has been created, each operator, using the display module 24, can use these categories to profile each individual record entered. The profiling consists in selecting a part of the categories present in a file so that the record that is being profiled has the visibility of the tables contained in the selected categories.

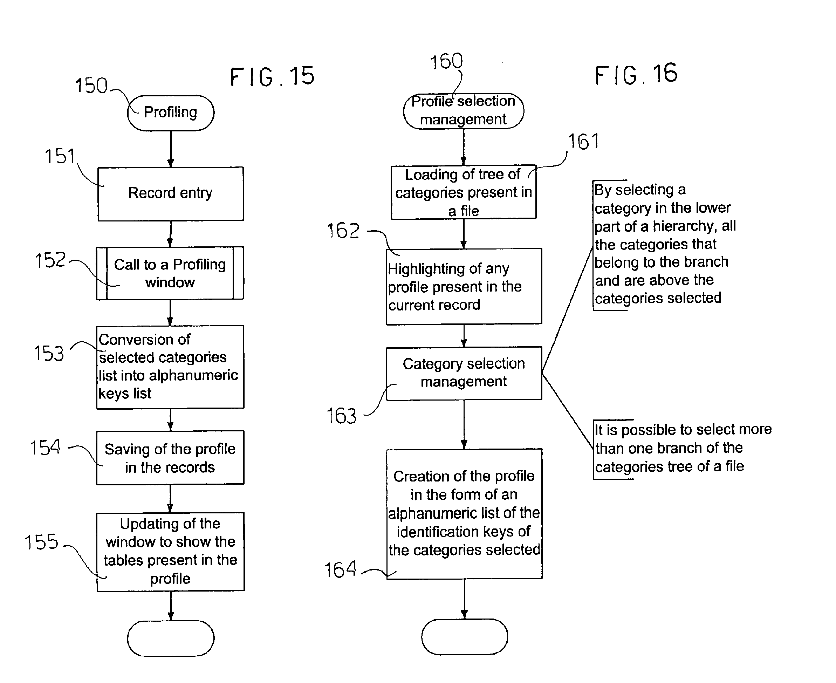

A profiling procedure 150 is described with reference to Figure 15. This procedure is activated by the user within the display module 24.

In the step 151 the operator, by pressing the "New" button present in the toolbar of the display window of the records of a file, activates the window for entering, modifying and deleting a record. In this window, the operator can enter the data into each field of the table and, among other things, he/she can profile the record.

This is what is done in the step 152 by pressing the "Profile" button present in the toolbar. The data entry window loads the dialogue window which shows, using a tree, the entire hierarchy of categories present in the data file within which the operator is entering the new record: the latter window is called the "Profiling window".

The algorithm 160 used to load the hierarchy of the categories into the "Profiling window" is shown in Fig. 16.

The first step 161 of this algorithm loads into a Tree View control the hierarchy of the categories present in the file within which the new record is being created. The structure containing this hierarchy is requested by the display module 24 from the server 10, specifically from the data managing module 15.

The step 162 is carried out only in the case in which the profiling operation relates to an already existing record. In this case the display module 24 selects, in the hierarchy loaded in the previous step, the categories whose identification key is present in the profile of the record to be modified.

The selection of the categories, step 163, is carried out by the operator by selecting them on the tree. It is a task of the algorithm to select automatically the categories present in the nodes of the levels above the selected nodes and, accordingly, to deselect all the categories whose nodes are situated in the hierarchy inside the selected category, if any.

The creation of the profile 164, which consists physically of the set of the unique alphanumeric keys relating to the selected categories, is obtained through a complete scanning of the tree of the categories to detect those selected by the operator.

The profiling operation ends with the pressing of the "OK" key. This event returns the control to the entry, modification and deletion window and sets off the step 153 of the algorithm in Figure 15, i.e. the transformation of the list of the selected categories into a structure of lists of alphanumeric keys (not visible to the system user). This list is called the "Profile" of the record and will be saved inside the "Profile" field of the "Master" table of the file in which the record is being created. It should be remembered that each file includes a table, called the "Master" whose task is to store the main data of all the records of a file. What is meant by main data is system information such as, for example, "Creation Date, "Last modification Date", "deletion flag", the operator who created the record and, obviously, "Profile". Besides the system data, a Master table contains all the data common to all the records of the file.

Figure 12 shows, for example, how the master table of the "Legal Persons" file contains the "Company Name" and the "Address" fields. The step 153 ends with the passage of the profile so created to the data entry, modification and deletion window which becomes visible again to the operator.

The step 154 is activated by pressing the "Confirm data entry" key. In this step the display module 24 modifies the profile field of the current record and sends the record thus created to the database. Note: The record passes through all the levels present in Figure 2 before being physically added into the database 3 (Figure 2).

Each module present in Figure 2 adds the information necessary for the correct transfer of the record (exactly as occurs for each item of data which passes through the levels of any network protocol). The modules 21 and 16 (Figure 2) are responsible, respectively, for converting the record into an XML document and vice versa, so that it can be conveyed through an http channel.

If data transfer has taken place successfully, the "Profiling" algorithm (Figure 15) goes on to the next step, 155, which updates the record entry, modification and deletion window. This updating consists in recalculating the number of tables visible, and thus of data that can be entered, according to the profile chosen for the current record and based on the authorisations possessed by the operator using the system. The information on the tables to be displayed depends upon the structure of the file in which the record is being created and particularly how and where, that is within which categories, the tables have been created.

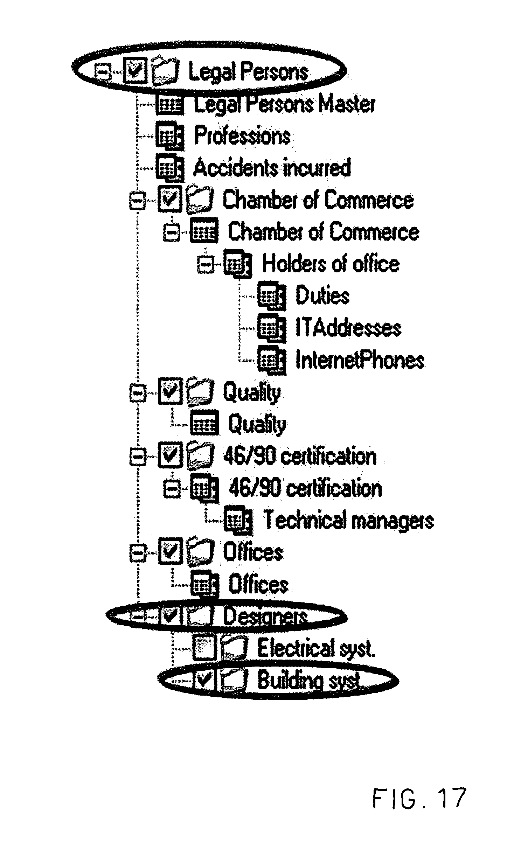

The system manages the selection of more than one profile. Figure 17 shows an example of a hierarchical structure relating to a file called "Legal Persons". In this hierarchy, which it is possible to create by using the File Managing module 25 (Figure 2), eight categories (represented by the icon of the directories) are present, each of which contains a certain number of tables. The display module 24 is responsible for displaying this hierarchy, in particular in the step 161 by using an XML format document received from the Decoder/Encoder module 14.

In the example in question it can be noted the last two categories are both highlighted. The operator obtains this result by selecting solely the category "Building Syst."; it will be the profile management algorithm, present in the module 24, that selects the category "Planners" whose node is situated in the branch that links the category selected by the operator with the node containing the name of the file which, it should be remembered, is "Legal Persons".

It is also possible to select a category not containing tables. In this case the profile serves only to identify a type of record so as to simplify the search.

The data display module 24 allows the operator to profile each individual record entered. This operation, performed by selecting a hierarchical subset of the categories into which the file is organised, affords the possibility of making only a part of the entire table hierarchy visible.

The system, according to the invention, handles the automatic creation of the data entry forms and creates automatically the buttons, in the data entry form, linked to the commands for passing from one file to another according to the structures created inside the File Managing module 25. No intervention by developers or system engineers is necessary to obtain this result since the display module 24 handles it by using the "Dynamic Window Creation" algorithm 60 (Figure 6).

The algorithm 60 in Figure 6 also handles the insertion of the buttons into the data form to allow two or more files to be linked reciprocally, ensuring that only the data filtered according to the main record are displayed.

For example if we want to create a database that manages a company's vehicle fleet, the data administrator creates the following files: *Vehicles, Employees* and *Accidents incurred,* linking them to each other.

The data display module 24 will be responsible for creating the appropriate tools to navigate between the files so that:
- for each vehicle there is a link to the list of accidents in which it has been involved;
- for each employee it is possible to view the accidents incurred and in which vehicle.

The system according to the invention eliminates the time for the creation of the windows for the data entry, since it handles their creation by using the metadata of structures created previously through the file managing module 25.

Unlike the solutions of the prior art, the system according to the invention can manage two different customised display schemes: the user level customisation scheme and the company level customisation scheme. This solution allows each user of the system to modify the position, the character and the colour of each box containing the data so as to be able to highlight the most important data or to adapt the data displayed to the size of the user's own screen. It is always possible, however, using the company level customisation, to be able to display the data according to a scheme known to all the employees of an organisation.

From the structural point of view, this dual level of customisation of the forms, specific to our invention, is obtained by making the display module 24 call up the Repositioning algorithm e 100 (Figure 10).

In the step 101 this algorithm checks if a locally saved form configuration is present within a specific XML document saved in the local PCs (Figure 1). If there is not, it searches for any customisation saved on the server relating to the table whose data are to be displayed, step 102. This check is carried out by calling on a function of the Data managing module 15 passing between the layers 21 and 16 positioned in the client part 20 and the server part 10 of the system, respectively. The subsequent steps 103, 104 and 105 are carried out within the display module 24 (Figure 2) and carry out the activity of positioning, colouring and formatting again the graphic controls (writing fields, cascade boxes, calendars, etc.) responsible for the data entry.

Within the system, according to the invention, there is a particular field, called the "Magic Field". To all appearances, this field looks like a normal list of values (texts, numbers, etc.). In fact, during the creation of this field within the File Managing module 25, the operator creating said field has been able to associate a sub-set of fields belonging to the set of fields present in the entire table.

The data display module 24, through an algorithm associated with the selection of an element within the list of values contained in the "Magic Field", analyses the fields present in the form and hides those not belonging to the sub-set associated with the element selected. At the same time it hides the fields not belonging to this sub-set.

Some advantages of the system according to the invention are described below.

This system allows files, possibly linked to each other, to be created intuitively and without the aid of programmers or of system engineers. The procedures for the creation of the files are all raised to a higher level of abstraction than that necessary during the creation of data files with the software tools of the prior art. In fact, in the system according to the invention, the type of data is selected automatically by the abstraction module 13 by extrapolating it from the requested content.

With the system according to the invention, it is possible to organise the tables within functional categories, exploiting which each individual record can show solely and only the data for which it has been profiled.

For example, by creating a Supplier file having the following structure: 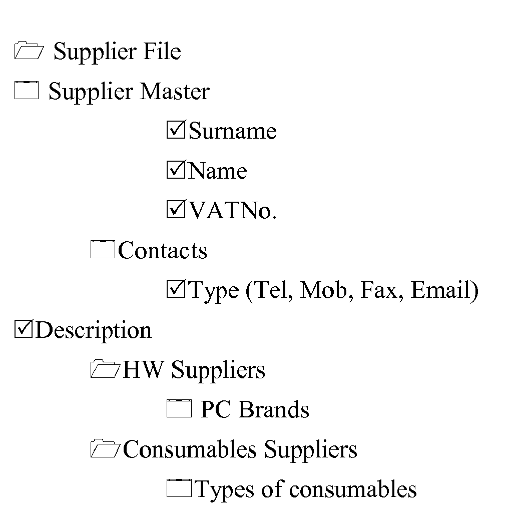 it is possible to "profile" each individual supplier as a "HW Supplier" or a "Consumables Supplier" and in this manner cause the data display module 24 to show the tables "PC Brands" and/or "Types of consumables" according to the choice.

With the system according to the invention it becomes intuitive to search a set of records that belong to a specific category since the data display module 24, by processing the structure of the files created with the managing module 25, shows hierarchically the profiling categories present in an file, leaving to the operator only the choice of the category (or of the categories) to be displayed. It therefore becomes simple for an operator to extract all the HW suppliers since the only operation to be performed is to select the "HW Suppliers" node in the hierarchy provided by the system and to apply the filter to the data.

Furthermore, each individual operator can customise the way of displaying the data present in a file without modifying the structure of the windows of the application in any way. This turns out into lower costs (no programmer is needed) and into a greater flexibility (anyone can highlight on his own monitor the information considered most important).

Numerous changes and modifications of detail within the reach of a person skilled in the art can be made to the present embodiment of the invention without thereby departing from the scope of the invention as set forth in the appended claims.

## Claims

1. A dynamic system for creating and managing a database (4), comprising:
- at least one server device (3, 6) in which a server software part (10) is installed,
- at least one database (4) contained in said server device (3, 6),
- at least one client device (5, 7), in which a client software part (20) is installed, adapted to connect to said server device (3, 6) to access the database (4),
**characterised in that**
- the data contained in the database (4) are organised into dynamic tables according to a hierarchical tree structure (30) and
- said server software part (10) comprises an abstraction module (13) which converts said hierarchical structure (30) into a relational structure (31), using metadata (32) which contain information concerning the structure of the tables and of the fields.

2. A system according to claim 1, **characterised in that** said abstraction module (13) is responsible for performing the mapping between standard SQL types of data of the relational structure (31) and the types of data shown by the dynamic tables of the hierarchical structure (30).

3. A system according to claim 1 or 2, **characterised in that** said server software part (10) comprises at least one server module (12) interposed between the database (4) and the abstractor module (13), which interacts with the database (4) according to the operating details of the server device (3).

4. A system according to any one of the preceding claims, **characterised in that** said client devices (5, 7) can be connected to said server device (3, 6) through a http channel and **in that** said server software part (10) and said client software part (20) comprise, respectively, a SOAP server module (16) and a SOAP client module (21), for the data transfer on the http channel by means of a SOAP protocol.

5. A system according to claim 4, **characterised in that** said software server part (10) comprises a decoder/encoder (14) interposed between said abstractor (13) and said SOAP module (16) to convert the hierarchical data structure of the dynamic tables (30) into a compatible format for the transfer on a http channel, through said SOAP Server module (16).

6. A system according to claim 4 or 5, **characterised in that** said software server part (10) comprises a data managing module (15) interposed between said abstractor (13) and said SOAP module (16) to maintain the link to the sets of records transferred to the client devices (5, 7) for displaying, modifying and deleting the records and enters the additional information from the hierarchical structure of tables (30) to maintain the hierarchies and the information on the modifications to the records.

7. A system according to any one of claims 4 to 7, **characterised in that** said client software part (20) comprises a data decoder/encoder module (23, 23') which is responsible for converting the information of the file structures, received as XML documents from the client SOAP module (21), into data structures that can be used by the client devices (5, 7) to show this information.

8. A system according to claim 7, **characterised in that** said client software part (20) comprises a data display module (24, 24') which interprets the metadata (32) sent from the decoder/encoder (23, 23') to construct windows for the data entry and to create hierarchical links between tables, so as to facilitate the navigation among said data.

9. A system according to claim 7 or 8, **characterised in that** said client software part (20) comprises a file creating and managing module (25) which is responsible for translating the entered hierarchies into a structure that can be understood by the abstractor module (13) of the server software part which, in turn, generates the tables for filing the data.

10. A system according to any one of claims 7 to 9, **characterised in that** said client software part (20) comprises a search module (26, 26') which allows the creation of parametric queries that can be used again as many times as necessary.

11. A system according to any one of the preceding claims, **characterised in that** said client software part (20) comprises a Windows application for client devices with a Windows operating system (5) and a web application (22) for web client devices (7).
